# EUROPÄISCHE PATENTSCHRIFT

(11) **EP 2 284 065 B1**
(45) Veröffentlichungstag und Bekanntmachung des Hinweises auf die Patenterteilung: **20.11.2013**
(21) Anmeldenummer: 10014941.8
(22) Anmeldetag: 08.09.2006
(51) Int. Cl.: B62D 21/11, B62D 29/00

(54) **Vorderachsträger, insbesondere für Kraftfahrzeuge**
Front axle carrier, in particular for a motor vehicle
Support d'axe avant, en particulier pour véhicules automobiles

(30) Priorität: 13.09.2005 DE 102005043759
(43) Veröffentlichungstag der Anmeldung: 16.02.2011
(62) Teilanmeldung aus: 06775943.1
(73) Patentinhaber: KSM Castings Group GmbH, 31137 Hildesheim (DE)
(72) Erfinder: Eickmann, Jürgen, 31174 Schellerten (DE); Lange, Uwe, 38855 Wernigerode (DE)
(74) Vertreter: Patentanwälte Thömen & Körner

(56) Entgegenhaltungen:
- EP-A1- 0 779 204
- EP-A1- 1 504 983
- WO-A-90/05083
- DE-A1- 10 142 388
- US-A- 5 918 893
- US-A1- 2002 050 706

## Beschreibung

Die Erfindung betrifft einen Vorderachsträger für Kraftfahrzeuge. Solche Träger, wie sie auch als Schemel, Rahmen oder Hilfsrahmen bezeichnet werden, werden, nachdem sie mit Aggregaten bzw. Hilfsaggregaten versehen sind, als vormontierte Einheiten oder Module an Fahrzeugaufbauten, zum Beispiel an der Karosserie und/ oder an Längsträgern eines Fahrzeuges befestigt.

Ein derartiger Schemel bzw. Vorderachsträger, an dem die jeweils zwei Aufnahmen für die Lager zur Schwenklagerung je eines der beiden Radführungsglieder, wie der beiden Quer- bzw. Dreieckslenker, vorgesehen sind und weitere Aufnahmen bzw. Ausnehmungen zur Befestigung des Lenkgetriebes, des Stabilisators und änderer Aggregate und wobei der Schemel außerdem noch Aufnahmen bzw. Ausnehmungen für die Befestigung desselben als vorgefertigte Einheit mitsamt vormontierten Aggregaten am Fahrzeugaufbau besitzt, ist durch die DE 199 20 051 A1 bekannt geworden.

Derartige Schemel haben den Nachteil, dass sie sehr aufwändig in der Herstellung sind, weil zunächst für die Längs- als auch für die Querträger verschiedene Profile hergestellt werden müssen (auch Innendruck-verformte), weiterhin müssen die Aufnahmen für die verschiedenen Aggregate sowie die Aufnahmen des Schemels am Fahrgestell eigens angebracht werden, zum Beispiel angeschraubt oder verschweißt und einzelne Aufnahmen zum Beispiel am Ende der Seitenträger, umgeformt, zum Beispiel abgeplattet werden.

Aus der DE 101 42 388 A1 ist eine Hilfsrahmenanordnung mit einem Hilfsrahmen bzw. Vorderachsträger für Kraftfahrzeuge bekannt, bei dem Aufnahmen für die Lagerstellen zur Schwenklagerung von Radlenkern und Aufnahmen zur Befestigung des Vorderachsträgers als vorgefertigte Einheit mit vormontierter Servolenkeinrichtung an der Fahrzeugkarosserie vorgesehen sind, sowie Aufnahmen bzw. Ausnehmungen für die Befestigung der Servolenkeinrichtung, wobei der Vorderachsträger als mit diesen Aufnahmen bzw. Ausnehmungen einstückig gegossenes und diese untereinander verbindendes Bauteil aus Leichtmetall hergestellt ist.

Der vorliegenden Erfindung lag die Aufgabe zugrunde, die Nachteile der bisher bekannt gewordenen Träger bzw. Rahmen oder Schemel zu vermeiden und die Herstellung derselben zu vereinfachen und preiswerter zu gestalten, die Anzahl der Bauteile und damit Füge- und Montageprozesse zu reduzieren, die Handhabung zu verbessern, Gewicht am Fahrzeug selbst und am Rahmen und damit Transportkosten einzusparen und auch die ungefederten Massen zu verringern. Weiterhin soll die Montage der Aggregate zu einer vormontierten Einheit erleichtert und verbilligt werden, ebenso wie die Montage der vormontierten Einheit in das Kraftfahrzeug.

Die Erfindung betrifft einen Vorderachsträger, bei dem jeweils zwei Aufnahmen bzw. Ausnehmungen für die Lager zur Schwenklagerung je eines von zwei Radführungsgliedern, wie zweier Quer- bzw. Dreieckslenker, und Aufnahmen bzw. Ausnehmungen zur Befestigung des Vorderachsträgers als vorgefertigte Einheit mitsamt vormontierten Aggregaten am Fahrzeugaufbau, sowie wenigstens einzelne der nachfolgend angeführten Aufnahmen bzw. Ausnehmungen für
- die Befestigung des Lenkgetriebes,
- die Befestigung des Stabilisators,
- die Lagerung einer Pendelstütze,
und der Vorderachsträger als mit diesen Aufnahmen einstückig gegossenes und diese untereinander verbindendes Bauteil aus Leichtmetall hergestellt ist.

Erfindungsgemäß ist vorgesehen, dass das Leichtmetall Aluminium oder eine Aluminiumlegierung ist. Weiterhin kann es vorteilhaft sein, das Bauteil, also den Vorderachsträger, in einem Aluminiumgussverfahren, wie im Kokillengussverfahren, herzustellen.

Ein derartiger Vorderachsträger oder Schemel ist gegenüber den bisher bekannt gewordenen insgesamt erheblich günstiger herzustellen, weil das Zusammenfügen einzelner den Rahmen bildender Teile und das Befestigen der Aufnahmen entfällt, also Füge- und Montageprozesse reduziert werden. Erstaunlicherweise ist durch die Erfindung auch eine erhebliche Gewichtsersparnis möglich durch das höhere spezifische Gewicht von Aluminium gegenüber dessen Wirkstoffen. Dadurch kann nicht nur Gewicht am Fahrzeug selbst und damit Kraftstoff eingespart werden, sondern es können weiterhin Transportkosten eingespart und die gefederten Massen verringert werden.

Der erfindungsgemäße Vorderachsträger kann weiterhin - bis auf die Ausnehmungen für die Aufnahmen und weiterer Ausnehmungen, z.B. für Montagezwecke - einen praktisch durchgehenden Grundkörper aufweisen, der zweckmäßigerweise von Verstärkungssicken umgeben ist und die Aufnahmen für die Lagerung der Radführungsglieder können als Ausleger ausgebildet sein. Dabei ist es zweckmäßig, wenn die eine der beiden Aufnahmen für jedes der Radführungsglieder derart ausgebildet ist, dass diese Aufnahme zumindest zwei, zumindest annähernd in der Fahrzeuglängsrichtung beabstandete Aufnahmeglieder besitzt, zur U-förmig umgreifenden Halterung des einen Lagers am Radführungsglied und wobei die zweite der Aufnahmen zur Lagerung jedes der Radführungsglieder - in Fahrzeuglängsrichtung gesehen - beabstandet von den Aufnahmegliedern ist und wobei die zweite Aufnahme zur Lagerung des anderen als Zapfen ausgebildeten Lagers des Radführungsgliedes dient, wobei der Lagerzapfen des Radführungsgliedes zumindest annähernd in Längsrichtung des Fahrzeuges verlaufen kann.

Es kann besonders vorteilhaft sein, an dem die zweite Auflage aufweisenden Ausleger - einstückig mit diesem - eine erste Aufnahme bzw. Ausnehmung für Befestigungsmittel zur Befestigung des Trägers am Fahrzeugaufbau vorzusehen, wobei es zweckmäßig sein kann, wenn diese Aufnahme auf der dem Grundkörper abgekehrten Seite dieser zweiten Aufnahme vorgesehen ist.

Erfindungsgemäß weist der die zweite Aufnahme aufweisende Ausleger zwei von der zweiten Aufnahme ausgehende, den Ausleger umgebende und in den Grundkörper einmündende Verstärkungssicken auf. Dabei kann es zweckmäßig sein, wenn die eine Verstärkungssicke auf der der ersten Aufnahme zugekehrten Seite des die zweite Aufnahme tragenden Auslegers verläuft und in den Grundkörper übergeht. Die weitere Verstärkungssicke auf der der ersten Auflage abgekehrten Seite des die zweite Aufnahme tragenden Auslegers kann zweckmäßigerweise im Bereich einer zweiten Aufnahme für Befestigungsmittel zur Festlegung des Trägers am Fahrzeugaufbau in den Grundkörper übergehen.

Durch eine derartige Ausgestaltung sind optimale Festigkeitswerte bei geringstmöglichem Materialeinsatz zu verwirklichen.

Der die zweite Aufnahme tragende und vom Grundkörper ausgehende Ausleger weist zweckmäßigerweise einen Doppel-T-Querschnitt auf.

Vorteilhaft kann es weiterhin sein, wenn der Ausleger zwischen der zweiten Aufnahme für die andere Lagerung und der zweiten Aufnahme bzw. Ausnehmung für Befestigungsmittel zur Festlegung des Trägers am Fahrgestell eine weitere zumindest annähernd quer zum Ausleger verlaufende Verstärkungssicke aufweist.

Durch eine derartige Ausgestaltung sind optimale Festigkeitswerte bei geringstmöglichem Materialeinsatz zu verwirklichen.

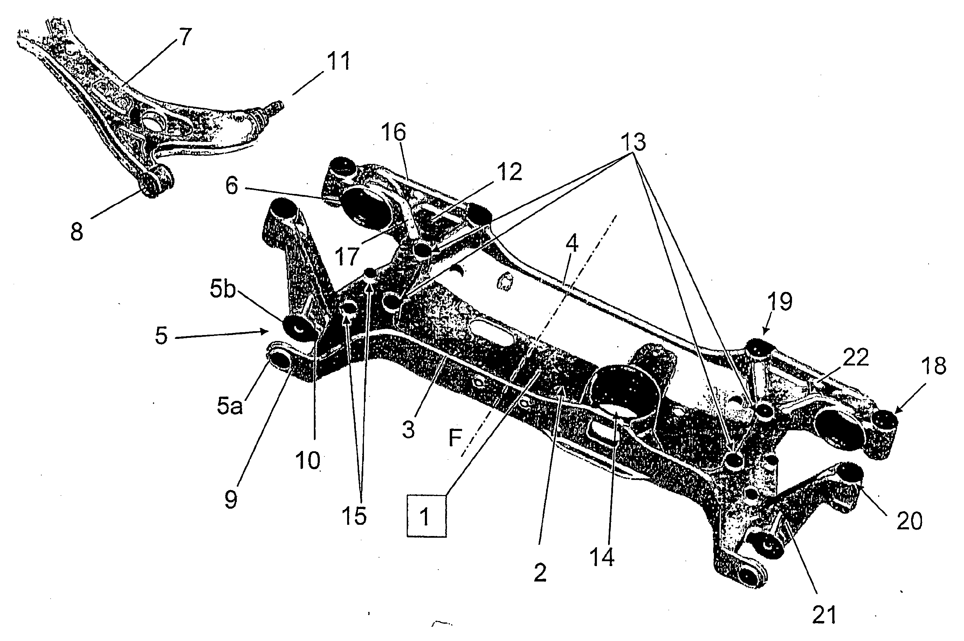

Anhand des in der Figur dargestellten Ausführungsbeispieles sei die Erfindung näher erläutert.

Der Vorderachsträger 1 besitzt hier einen Grundkörper 2, der von Versteifungsrippen 3,4 umgeben ist. Er besitzt weiterhin Lageraufnahmen 5,6 beidseits der Fahrzeugslängsachse F zur Lagerung eines Radführungsgliedes bzw. Querienkers oder Dreiecklenkers 7 auf jeder Seite der Fahrzeugachse F. Dabei ist die Aufnahme 5 für die eine Lagerstelle 8 des Querlenkers 7 durch zwei Auslegeraufnahmeglieder 5a,5b gebildet, die in je einem Ausleger 9,10 vorgesehen sind, welcher vom Grundkörper 1 ausgeht.

Die zweite Lageraufnahme 6 für die zweite Lagerstelle 11 am Querlenker 7 ist ebenfalls an einem Ausleger 12 vorgesehen. Der Vorderachsträger 1 hat weiterhin Aufnahmen bzw. Ausnehmungen 13 zur Befestigung eines Lenkgetriebes.

Weiterhin ist in den Träger 1 eine Aufnahme 14 zur Lagerung der Pendelstütze vorgesehen und Aufnahmen bzw. Ausnehmungen 15 zur Befestigung des Stabilisators.

Die Ausleger 12 sind durch Verstärkungsrippen 16,17 umgeben, die vom Grundkörper ausgehend in der Lageraufnahme 6 enden.

Der Träger besitzt weiterhin beidseits der Fahrzeuglängsachse F jeweils vorgesehene erste, zweite und dritte Aufnahmen bzw. Ausnehmungen für Befestigungsmittel zur Festlegung des Trägers am Fahrzeugaufbau, nämlich Aufnahmen bzw. Ausnehmungen 18,19,20. Die erste Aufnahme bzw. Ausnehmung 18 für Befestigungsmittel zur Festlegung des Trägers am Fahrzeugaufbau ist am Ausleger 16 vorgesehen, und zwar auf der dem Grundkörper abgekehrten Seite der Aufnahme 6.

Die jeweilige Sicke 16 geht unmittelbar in die zweite Aufnahme für die Befestigungsmittel zur Festlegung des Trägers am Fahrzeugaufbau über.

Die dritte Aufnahme 20 ist an einem Ausleger 21 vorgesehen, der ausgeht von dem Ausleger 10, der auch das Aufnahmeglied 5b der ersten Lageraufnahme 5 enthält.

Der Ausleger 12 mit seinen beiden Verstärkungsrippen 16 und 17 hat einen Doppel-T-förmigen Querschnitt und besitzt weiterhin auf der der Aufnahme 18 abgekehrte Seite der zweiten Lageraufnahme 6 eine zumindest annähernd quer zum Träger 12 verlaufende Verstärkungssicke 22.

## Patentansprüche

1. Vorderachsträger (1) für Kraftfahrzeuge, bei dem jeweils zwei Aufnahmen bzw. Ausnehmungen (5, 6) für die Lagerstellen (8, 11) zur Schwenklagerung je eines von zwei Radführungsgliedern (7), wie Quer- bzw. Dreieckslenker, und Aufnahmen bzw. Ausnehmungen (18, 19, 20) zur Befestigung des Vorderachsträgers (1) als vorgefertigte Einheit mitsamt vormontierten Aggregaten am Fahrzeugaufbau vorgesehen sind, sowie wenigstens einzelne der nachfolgend angeführten Aufnahmen bzw. Ausnehmungen für
- die Befestigung des Lenkgetriebes (13)
- die Befestigung des Stabilisators (15),
- die Lagerung einer Pendelstütze (14),
und der Vorderachsträger (1) als mit diesen Aufnahmen bzw. Ausnehmungen (5, 6, 13, 14, 15, 18, 19, 20) einstückig gegossenes und diese untereinander verbindendes Bauteil aus Leichtmetall hergestellt ist, **dadurch gekennzeichnet, dass** das Leichtmetall Aluminium oder eine Aluminiumlegierung ist, wobei die erste (5) und die zweite (6) der zwei Aufnahmen (5, 6) für die Lagerung der Radführungsglieder (7) als Ausleger (9, 10, 12) ausgebildet sind, wobei der die zweite Aufnahme (6) aufweisende Ausleger (12) zwei von der zweiten Aufnahme (6) ausgehende, den Ausleger (12) umgebende und in einen Grundkörper (2) einmündende Verstärkungsrippen bzw. -sicken (16, 17) aufweist, wobei die eine Verstärkungsrippe bzw. -sicke (17) auf der der ersten Aufnahme (5) zugekehrten Seite des die zweite Aufnahme (6) tragenden Auslegers (12) verläuft und in den Grundkörper (2) übergeht, wobei die die zweite Aufnahme (6) aufweisenden Ausleger (12) von den Verstärkungsrippen bzw. -sicken (16, 17) umgeben sind, die vom Grundkörper ausgehend in der zweiten Aufnahme (6) enden.

2. Vorderachsträger (1) nach Anspruch 1, **dadurch gekennzeichnet, dass** eine einzige Aufnahme bzw. Ausnehmung (14) für die Lagerung der Pendelstütze vorgesehen ist, welche (14) vorwiegend zylindrisch hülsenartig ausgebildet und vorwiegend zur Fahrbahn ausgerichtet ist.

3. Vorderachsträger (1) nach einem der Ansprüche 1 bis 2, **dadurch gekennzeichnet, dass** das Bauteil in einem Aluminiumgussverfahren, wie im Kippkokillengussverfahren, hergestellt ist.

4. Vorderachsträger (1) nach einem der Ansprüche 1 bis 3, **dadurch gekennzeichnet, dass** derselbe (1) - bis auf die Ausnehmungen bzw. Aufnahmen (5, 6, 13, 14, 15, 18, 19, 20) und gegebenenfalls weitere Ausnehmungen, z.B. Montageausnehmungen - einen praktisch durchgehenden Grundkörper (2) aufweist, der von Verstärkungsrippen bzw. -sicken (3, 4) umgeben ist.

5. Vorderachsträger (1) nach einem der Ansprüche 1 bis 4, **dadurch gekennzeichnet, dass** die erste (5) und die zweite (6) der zwei Aufnahmen (5, 6) für die Lagerung der Radführungsglieder (7) als Ausleger (9, 10, 12) ausgebildet sind, wobei die erste Aufnahme (5) zwei Aufnahmegliedern (5a, 5b) aufweist, die jeweils als Ausleger (9, 10) ausgebildet sind, und die zweite Aufnahme (6) als ein Ausleger (12) ausgebildet ist.

6. Vorderachsträger (1) nach einem der Ansprüche 1 bis 5, **dadurch gekennzeichnet, dass** die erste (5) der zwei Aufnahmen (5, 6) zur Lagerung jedes der Radführungsglieder (7) zwei zumindest annähernd in Fahrzeuglängsrichtung (F) beabstandete Aufnahmeglieder (5a, 5b) besitzt, zur U-förmig umgreifenden Halterung des einen Lagers (8) am Radführungsglied (7) und dass die zweite (6) der zwei Aufnahmen (5, 6) zur Lagerung jedes der Radführungsglieder (7) in Fahrzeuglängsrichtung (F) beabstandet von den Aufnahmegliedern (5a, 5b) ist und die zweite (6) der zwei Aufnahmen (5, 6) zur Lagerung der zweiten, als Zapfen ausgebildeten Lagerstelle (11) des Radführungsgliedes (7) dient.

7. Vorderachsträger (1) nach einem der Ansprüche 1 oder 5, **dadurch gekennzeichnet, dass** an dem die zweite Aufnahme (6) aufweisenden Ausleger (12) eine erste Aufnahme (18) für Befestigungsmittel zur Befestigung des Vorderachsträgers (1) am Fahrzeugaufbau vorgesehen ist.

8. Vorderachsträger (1) nach einem der Ansprüche 1 oder 5, **dadurch gekennzeichnet, dass** eine erste Aufnahme (18) für Befestigungsmittel auf der dem Grundkörper (2) abgekehrten Seite der zweiten Aufnahme (6) für die Lagerung des Radführungsgliedes (7) vorgesehen ist.

9. Vorderachsträger (1) nach Anspruch 1, **dadurch gekennzeichnet, dass** die andere Verstärkungsrippe bzw. -sicke (16) auf der der ersten Aufnahme (5) abgekehrten Seite des die zweite Aufnahme (6) tragenden Auslegers (12) im Bereich einer zweiten Aufnahme bzw. Ausnehmung für Befestigungsmittel zur Festlegung des Vorderachsträgers (1) am Fahrzeugaufbau in den Grundkörper (2) übergeht.

10. Vorderachsträger (1) nach einem der Ansprüche 1, 5, 7 oder 9, **dadurch gekennzeichnet, dass** der die zweite Aufnahme (6) tragende und vom Grundkörper (2) ausgehende Ausleger (12) einen Doppel-T-Querschnitt besitzt.

11. Vorderachsträger (1) nach einem der Ansprüche 1, 5, 7, 9 bis 10, **dadurch gekennzeichnet, dass** der die zweite Aufnahme (6) tragende Ausleger (12) zwischen der zweiten Aufnahme bzw. Ausnehmung (6) für die Aufnahme der zweiten Lagerstelle (11) und der zweiten Aufnahme bzw. Ausnehmung (19) für die Befestigungsmittel zur Festlegung des Vorderachsträgers (1) am Fahrgestell eine weitere zumindest annähernd quer zum Ausleger (12) verlaufende Verstärkungsrippe bzw. -sicke (22) aufweist.

12. Vorderachsträger (1) nach einem der Ansprüche 1 bis 11, **dadurch gekennzeichnet, dass** die erste (5) der zwei Aufnahmen (5, 6) zur Lagerung jedes der Radführungsglieder (7) zwei zumindest annähernd in Fahrzeuglängsrichtung (F) beabstandete Aufnahmeglieder (5a, 5b) besitzt, zur U-förmig umgreifenden Halterung des einen Lagers (8) am Radführungsglied (7) und dass die zweite (6) der zwei Aufnahmen (5, 6) zur Lagerung jedes der Radführungsglieder (7) in Fahrzeuglängsrichtung (F) beabstandet von den Aufnahmegliedern (5a, 5b) ist.

13. Vorderachsträger (1) nach einem der Ansprüche 1 bis 12, **dadurch gekennzeichnet, dass** die zweite (6) der zwei Aufnahmen (5, 6) zur Lagerung der zweiten als Zapfen ausgebildeten Lagerstelle (11) des Radführungsgliedes (7) dient.

## Claims

1. A front-axle bracket (1) for motor vehicles, in which there are respectively provided two receptacles or recesses (5, 6) for the bearing locations (8, 11) for the swivel bearing in each case of one of two wheel-guiding members (7), such as transverse or triangular control arms, and receptacles or recesses (18, 19, 20) for attaching the front-axle bracket (1), as a pre-produced unit together with premounted assemblies, onto the vehicle structure, and at least one of the below-listed receptacles or recesses for
- the attachment of the steering gear (13)
- the attachment of the stabiliser (15),
- the bearing of a pendulum support (14)
and the front-axle bracket (1) is manufactured as a light-metal component which is cast in one piece with these receptacles or recesses (5, 6, 13, 14, 15, 18, 19, 20) and which connects these together, **characterised in that** the light metal is aluminium or an aluminium alloy, wherein the first (5) and the second (6) of the two receptacles (5, 6) for bearing the wheel-guiding members (7) are configured as arms (9, 10, 12), wherein the arm (12), which has the second receptacle (6), has two reinforcing ribs or fins (16, 17) which emerge from the second receptacle (6), surround the arm (12) and open into a base body (2), wherein one reinforcement rib or fin (17) runs on the side, turned towards the first receptacle (5), of the arm (12) bearing the second receptacle (6) and merges into the base body (2), wherein the arms (12) having the second receptacle (6) are surrounded by the reinforcement ribs or fins (16, 17) which, emerging from the base body, terminate in the second receptacle (6).

2. The front-axle bracket (1) according to claim 1, **characterised in that** a single receptacle or recess (14) is provided for bearing the pendulum support, which (14) is predominantly formed as a cylindrical sleeve and oriented predominantly towards the road surface.

3. The front-axle bracket (1) according to one of claims 1 to 2, **characterised in that** the component is manufactured in an aluminium casting process, such as a tilting permanent mold casting process.

4. The front-axle bracket (1) according to one of claims 1 to 3, **characterised in that** this (1) - except for the recesses or receptacles (5, 6, 13, 14, 15, 18, 19, 20) and where applicable further recesses, e.g. mounting recesses - has a practically continuous base body (2), which is surrounded by reinforcing ribs or fins (3, 4).

5. The front-axle bracket (1) according to one of claims 1 to 4, **characterised in that** the first (5) and the second (6) of the two receptacles (5, 6) for bearing the wheel-guiding members (7) are configured as arms (9, 10, 12), wherein the first receptacle (5) has two receiving members (5a, 5b), which are each configured as arms (9, 10), and the second receptacle (6) is configured as an arm (12).

6. The front-axle bracket (1) according to one of claims 1 to 5, **characterised in that** the first (5) of the two receptacles (5, 6) for bearing each of the wheel-guiding members (7) possesses two receiving members (5a, 5b) spaced apart at least approximately in the longitudinal direction (F) of the vehicle, for the U-shaped encompassing mounting of one bearing (8) on the wheel-guiding member (7) and that the second (6) of the two receptacles (5, 6) for bearing each of the wheel-guiding members (7) is spaced apart in the longitudinal direction (F) of the vehicle from the receiving members (5a, 5b) and the second (6) of the two receptacles (5, 6) serves to bear the second bearing location (11), which is configured as a journal, of the wheel-guiding member (7).

7. The front-axle bracket (1) according to one of claims 1 or 5, **characterised in that** a first receptacle (18) for attachment means for attaching the front-axle bracket (1) onto the vehicle structure is provided at the arm (12) which has the second receptacle (6).

8. The front-axle bracket (1) according to one of claims 1 or 5, **characterised in that** a first receptacle (18) for attachment means is provided on the side, which is turned away from the base body (2), of the second receptacle (6) for bearing the wheel-guiding member (7).

9. The front-axle bracket (1) according to claim 1, **characterised in that** the other reinforcing rib or fin (16) on the side, turned away from the first receptacle (5), of the arm (12) bearing the second receptacle (6) merges into the base body (2) in the region of a second receptacle or recess for attachment means for fixing the front-axle bracket (1) onto the vehicle structure.

10. The front-axle bracket (1) according to one of claims 1, 5, 7 or 9, **characterised in that** the arm (12) bearing the second receptacle (6) and emerging from the base body (2) has a double-T cross-section.

11. The front-axle bracket (1) according to one of claims 1, 5, 7, 9 to 10, **characterised in that** the arm (12) bearing the second receptacle (6) has a further reinforcing rib or fin (22) running at least approximately transverse to the arm (12) between the second receptacle or recess (6) for receiving the second bearing location (11) and the second receptacle or recess (19) for the attachment means for fixing the front-axle bracket (1) to the chassis.

12. The front-axle bracket (1) according to one of claims 1 to 11, **characterised in that** the first (5) of the two receptacles (5, 6) for bearing each of the wheel-guiding members (7) has at least two receiving members (5a, 5b) spaced at least approximately in the longitudinal direction (F) of the vehicle for the encompassing U-shaped mounting of the one bearing (8) onto the wheel-guiding member (7) and that the second (6) of the two receptacles (5, 6) for bearing each of the wheel-guiding members (7) is spaced, in the longitudinal direction (F) of the vehicle, apart from the receiving members (5a, 5b).

13. The front-axle bracket (1) according to one of claims 1 to 12, **characterised in that** the second (6) of the two receptacles (5, 6) serves to bear the second bearing location (11), which is configured as a journal, of the wheel-guiding member (7).

## Revendications

1. Support d'essieu avant (1) pour véhicules automobiles, où sont prévus deux logements ou évidements (5, 6) pour les paliers (8, 11) destinés à la réception chacun d'un de deux organes guide-roue (7), tels que des bras de suspension ou bras de suspension triangulaires, et des logements ou évidements (18, 19, 20) pour la fixation du support d'essieu avant (1) en tant qu'unité préfabriquée avec des agrégats pré-montés sur la carrosserie du véhicule, ainsi qu'au moins quelques-uns des logements ou évidements mentionnés ci-après pour
- la fixation du boîtier de direction (13),
- la fixation du stabilisateur (15),
- le montage d'une biellette d'appui (14),
et où le support d'essieu avant (1) est fabriqué comme composant en métal léger coulé d'une seule pièce avec ces logements ou évidements (5, 6, 13, 14, 15, 18, 19, 20) et reliant ceux-ci entre eux, **caractérisé en ce que** le métal léger est de l'aluminium ou un alliage d'aluminium, le premier (5) et le deuxième (6) des deux logements (5, 6) pour la réception des organes guide-roue (7) étant réalisés sous forme de consoles (9, 10, 12), la console (12) présentant le deuxième logement (6) étant pourvue de deux nervures ou moulures de renforcement (16, 17) partant du deuxième logement (6), entourant la console (12) et débouchant dans un corps de base (2), la première nervure ou moulure de renforcement (17) s'étendant sur le côté, opposé au premier logement (5), de la console (12) supportant le deuxième logement (6) et se prolongeant par le corps de base (2), les consoles (12) présentant le deuxième logement (6) étant entourées par les nervures ou moulures de renforcement (16, 17) partant du corps de base et finissant dans le deuxième logement (6).

2. Support d'essieu avant (1) selon la revendication 1, **caractérisé en ce qu'**un seul logement ou évidement (14) est prévu pour la suspension de la biellette d'appui, lequel (14) est essentiellement réalisé en forme de manchon cylindrique et est essentiellement orienté vers la chaussée.

3. Support d'essieu avant (1) selon l'une des revendications 1 et 2, **caractérisé en ce que** le composant est fabriqué au moyen d'un procédé, de fonte d'aluminium tel qu'un procédé de moulage à lingotière à bascule.

4. Support d'essieu avant (1) selon l'une des revendications 1 à 3, **caractérisé en ce que** celui-ci (1) - à l'exception des évidements ou logements (5, 6, 13, 14, 15, 18, 19, 20) et le cas échéant d'autres évidements, tels que des évidements de montage - présente un corps de base (2) pratiquement continu, entouré de nervures ou moulures de renforcement (3, 4).

5. Support d'essieu avant (1) selon l'une des revendications 1 à 4, **caractérisé en ce que** le premier (5) et le deuxième (6) des deux logements (5, 6) pour la réception des organes guide-roue (7) sont réalisés sous forme de consoles (9, 10, 12), le premier logement (5) étant pourvu de deux organes de réception (5a, 5b) réalisés chacun comme console (9, 10), et le deuxième logement (6) étant réalisé comme console (12).

6. Support d'essieu avant (1) selon l'une des revendications 1 à 5, **caractérisé en ce que** le premier (5) des deux logements (5, 6) pour la suspension de chacun des organes guide-roue (7) est pourvu de deux organes de réception (5a, 5b) espacés au moins sensiblement dans le sens de la longueur du véhicule (F), pour le maintien, en l'entourant en forme de U, du premier palier (8) sur l'organe guide-roue (7), et **en ce que** le deuxième (6) des deux logements (5, 6) pour la suspension de chacun des organes guide-roue (7) est espacé des organes de réception (5a, 5b) dans le sens de la longueur du véhicule (F), et le deuxième (6) des deux logements (5, 6) sert à la suspension du deuxième palier (11) de l'organe guide-roue (7), réalisé comme tourillon.

7. Support d'essieu avant (1) selon l'une des revendications 1 ou 5, **caractérisé en ce qu'**un premier logement (18) est prévu sur la console (12) présentant le deuxième logement (6), pour des moyens de fixation permettant la fixation du support d'essieu avant (1) sur la carrosserie du véhicule.

8. Support d'essieu avant (1) selon l'une des revendications 1 ou 5, **caractérisé en ce qu'**un premier logement (18) est prévu pour des moyens de fixation sur le côté, distant du corps de base (2), du deuxième logement (6) pour la suspension de l'organe guide-roue (7).

9. Support d'essieu avant (1) selon la revendication 1, **caractérisé en ce que** l'autre nervure ou moulure de renforcement (16) se prolonge par le corps de base (2) sur le côté, distant du premier logement (5), de la console (12) supportant le deuxième logement (6) au niveau d'un deuxième logement ou évidement pour des moyens de fixation permettant la fixation du support d'essieu avant (1) sur la carrosserie du véhicule.

10. Support d'essieu avant (1) selon l'une des revendications 1, 5, 7, ou 9, **caractérisé en ce que** la console (12) supportant le deuxième logement (6) et partant du corps de base (2) présente une section transversale en forme de double T.

11. Support d'essieu avant (1) selon l'une des revendications 1, 5, 7, 9 et 10, **caractérisé en ce que** la console (12) supportant le deuxième logement (6) présente, entre le deuxième logement ou évidement (6) pour la réception du deuxième palier (11) et le deuxième logement ou évidement (19) pour les moyens de fixation permettant la fixation du support d'essieu avant (1) sur le châssis de roulement, une autre nervure ou moulure de renforcement (22) s'étendant au moins sensiblement perpendiculairement à la console (12).

12. Support d'essieu avant (1) selon l'une des revendications 1 à 11, **caractérisé en ce que** le premier (5) des deux logements (5, 6) pour la suspension de chacun des organes guide-roue (7) est pourvu de deux organes de réception (5a, 5b) espacés au moins sensiblement dans le sens de la longueur du véhicule (F), pour le maintien, en l'entourant en forme de U, du premier palier (8) sur l'organe guide-roue (7), et **en ce que** le deuxième (6) des deux logements (5, 6) pour la suspension de chacun des organes guide-roue (7) est espacé des organes de réception (5a, 5b) dans le sens de la longueur du véhicule (F).

13. Support d'essieu avant (1) selon l'une des revendications 1 à 12, **caractérisé en ce que** ce que le deuxième (6) des deux logements (5, 6) sert à la suspension du deuxième palier (11) de l'organe guide-roue (7), réalisé comme tourillon.
